# EUROPÄISCHE PATENTSCHRIFT

(11) **EP 1 412 219 B1**
(45) Veröffentlichungstag und Bekanntmachung des Hinweises auf die Patenterteilung: **15.03.2006**
(21) Anmeldenummer: 02767200.5
(22) Anmeldetag: 12.07.2002
(51) Int. Cl.: B60N 2/06

(54) **FAHRZEUGSITZ MIT HÖHENEINSTELLER**
VEHICLE SEAT COMPRISING A HEIGHT ADJUSTING DEVICE
SIEGE DE VEHICULE COMPORTANT UN DISPOSITIF DE REGLAGE DE LA HAUTEUR

(30) Priorität: 01.08.2001 DE 10137298
(43) Veröffentlichungstag der Anmeldung: 28.04.2004
(73) Patentinhaber: KEIPER GmbH & Co. KG, 67657 Kaiserslautern (DE)
(72) Erfinder: SCHUMANN, Kai, 66509 Rieschweiler (DE); TEUFEL, Ingo, 67806 Rockenhausen (DE); MÜHLBERGER, Joachim, 67271 Übersülzen (DE)
(74) Vertreter: Patentanwälte Hosenthien-Held und Dr. Held
(86) Internationale Anmeldenummer: PCT/EP2002/007768
(87) Internationale Veröffentlichungsnummer: WO 2003/011632

(56) Entgegenhaltungen:
- DE-A- 19 938 717
- DE-A- 19 953 630
- US-A- 5 882 061
- US-A- 6 116 689

## Beschreibung

Die Erfindung betrifft einen Fahrzeugsitz, insbesondere einen Kraftfahrzeugsitz, mit den Merkmalen des Oberbegriffs des Anspruches 1.

Bei einem aus der DE 199 53 630 A1 bekannten Fahrzeugsitz, welcher zwischen dem Sitzrahmen und der Schwinge einen motorischen Antrieb für den Höheneinsteller aufweist, wird im Crashfall bei Überschreiten einer Grenzkraft in einer federbelasteten Schlitz-Zapfen-Führung die Geometrie des Höheneinstellers reversibel geändert, wobei durch ein Gesperre eine zusätzliche Kraftübertragung zwischen dem Sitzrahmen und der Fahrzeugstruktur geschaffen wird. Diese zusätzliche Kraftübertragung entlastet beispielsweise den Antrieb des Höheneinstellers und verriegelt die dem Antrieb gegenüberliegende, antriebsfreie Seite des Höheneinstellers. In der Regel ist die Aktivierung des Gesperres reversibel, d.h. der Fahrzeugsitz kann wieder in seine Ausgangsstellung zurückkehren.

Die US 5 882 061 A offenbart einen Fahrzeugsitz der eingangs genannten Art, bei welchem die hintere Schwinge und die Klinke mittels eines Scherstiftes drehfest miteinander verbunden sind und einen einheitlichen Bestandteil des Höheneinstellers bilden. Die besagten beiden Bauteile weisen je eine grobe Verzahnung und eine feine Verzahnung auf, welche zunächst deckungsgleich sind, wobei als Antrieb des Höheneinstellers ein am Sitzrahmen drehbar gelagertes Ritzel die grobe Verzahnung kämmt. Im Crashfall bricht der Scherstift, worauf sich die besagten beiden Bauteile eine Relativbewegung zueinander ausführen, wobei in Abhängigkeit der Richtung des Crash ein Bauteil mit der groben Verzahnung in Eingriff mit dem Ritzel bleibt, während das andere Bauteil mit der feinen Verzahnung in Eingriff mit dem Ritzel gelangt, welches dadurch gesperrt wird. Zwischen dem Lager des Ritzels und dem Unterbau besteht nun auf dieser Fahrzeugsitzseite eine alternative Kraftübertragung.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Im erfindungsgemäßen Fahrzeugsitz werden mit dem aktivierten und verriegelten Crashgesperre Bereiche des Höheneinstellers, die ansonsten ungesperrt sind, nämlich die nicht angetriebene Seite, verriegelt. Es findet dann eine möglichst gleichmäßige und direkte Kraftweiterleitung über den Höheneinsteller statt, und der Antrieb wird entlastet. Die irreversible Geometrieänderung des Höheneinstellers erlaubt einen Aufbau des Höheneinstellers mit einfacheren, kostengünstigeren und beispielsweise deformierbaren Elementen, was im Vergleich zum Fahrzeugsitz mit reversiblen Geometrieänderungen den Montageaufwand und die Herstellungskosten reduziert.

Vorzugsweise erfolgt die Geometrieänderung des Höheneinstellers durch eine Freigabe wenigstens eines zusätzlichen Bewegungs-Freiheitsgrades des Höheneinstellers, der dann aufgrund höherer Gelenkigkeit das Crashgesperre verriegelt, wodurch wiederum die Anzahl der Bewegungs-Freiheitsgrade reduziert wird, vorzugsweise der Höheneinsteller starr wird. Die starre Verriegelung des Höheneinstellers durch das Crashgesperre kann formschlüssig, beispielsweise mittels Zahnelementen, kraftschlüssig, beispielsweise mittels exzentrisch gekrümmten Reibflächen, oder in einer Kombination davon erfolgen.

In einer bevorzugten, einfach herzustellenden Ausführungsform erfolgt die Freigabe des zusätzlichen Bewegungs-Freiheitsgrades durch eine irreversible Zustandsänderung wenigstens eines Verbindungselementes, welches zwei ansonsten relativ zueinander verdrehbare Bestandteile des Höheneinstellers drehfest zusammenhält. Im Crashfall bewegen sich nach erfolgter, irreversibler Zustandsänderung des Verbindungselementes die beiden Bestandteile, wodurch das Crashgesperre verriegelt. Das Verbindungselement ist in einer besonders bevorzugten, kostengünstig herzustellenden Ausführungsform als Stift mit Sollbruchstelle ausgebildet, welcher auf Scherkräfte beansprucht wird. Es ist aber auch denkbar, die beiden Bestandteile durch eine starke Feder zusammen zu halten, welche die Grenzlast definiert.

Das Crashgesperre ist vorzugsweise in zwei unterschiedlichen Lastrichtungen wirksam, d.h. für Frontcrashs und für Heckcrashs geeignet. Um im Bedarfsfall die Grenzlasten unabhängig wählen und erhöhen zu können, ist vorzugsweise für jede Lastrichtung ein Stift mit Sollbruchstelle vorgesehen. Die Verriegelung kann durch zwei unabhängige Gesperre oder zur Reduzierung der Anzahl der Bauteile durch ein in zwei Richtungen wirksames Gesperre erfolgen, das beispielsweise ein bewegliches Verriegelungselement aufweist, welches in Abhängigkeit der Lastrichtung mit unterschiedlichen Verriegelungs-Gegenelementen zusammenwirkt. Das bewegliche Verriegelungselement kann mehrteilig oder bauraumoptimiert als einstückige Einheit ausgebildet sein, welche auch das zusätzliche Gelenk für den zusätzlichen Bewegungs-Freiheitsgrad des Höheneinstellers aufweist.

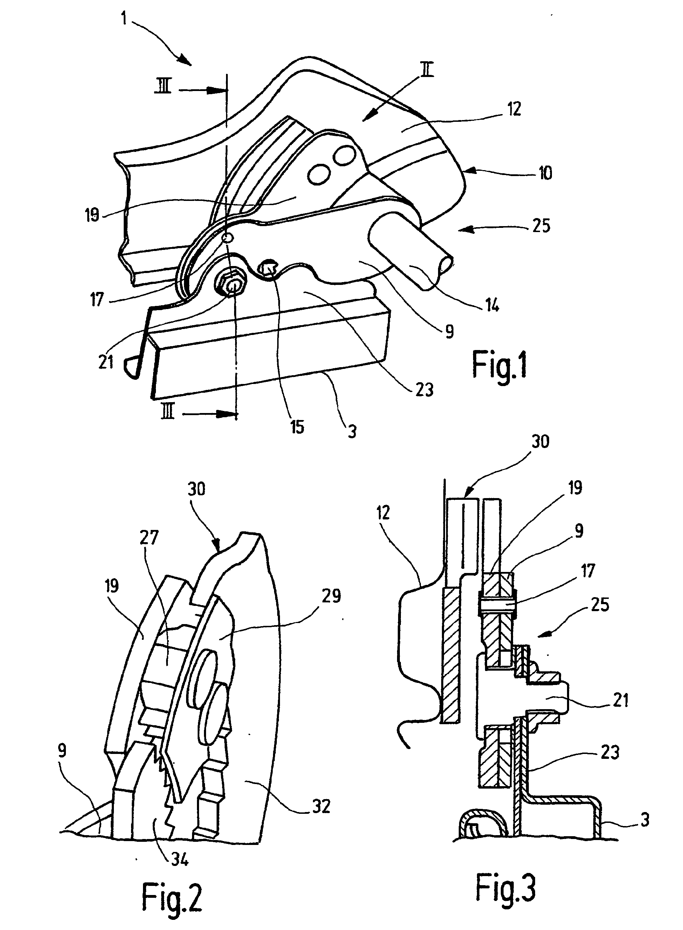

Im folgenden ist die Erfindung anhand zweier in der Zeichnung dargestellten Ausführungsbeispiele näher erläutert. Es zeigen
- Fig. 1: eine perspektivische Teilansicht des ersten Ausfdbrungsbeispiels im Innenbereich der rechten hinteren Schwinge im Normalfall,
- Fig. 2: eine Teilansicht mit Blick in Richtung des Pfeiles II in Fig. 1,
- Fig. 3: einen Schnitt entlang der Linie III-III in Fig. 1,

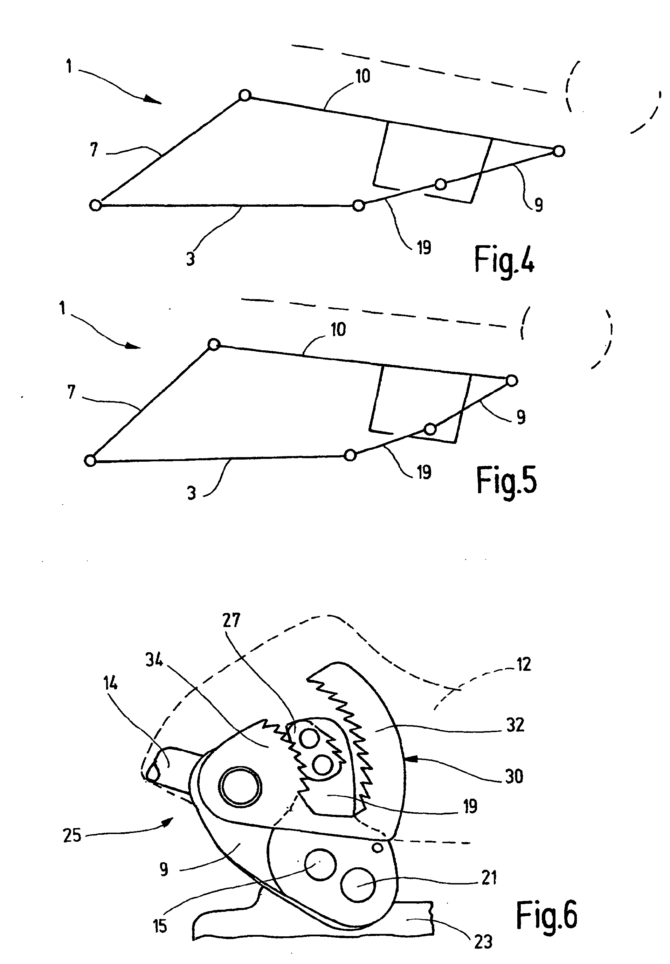

- Fig. 4: eine schematische Darstellung der Struktur des ersten Ausführungsbeispiels im Normalfall,
- Fig. 5: eine Darstellung entsprechend Fig. 4 im Front-Crashfall,
- Fig. 6: eine perspektivische Teilansicht des ersten Ausführungsbeispiels ohne Sitzrahmen-Seitenteil und Klinkenblech im Außenbereich der rechten hinteren Schwinge im Heck-Crashfall,

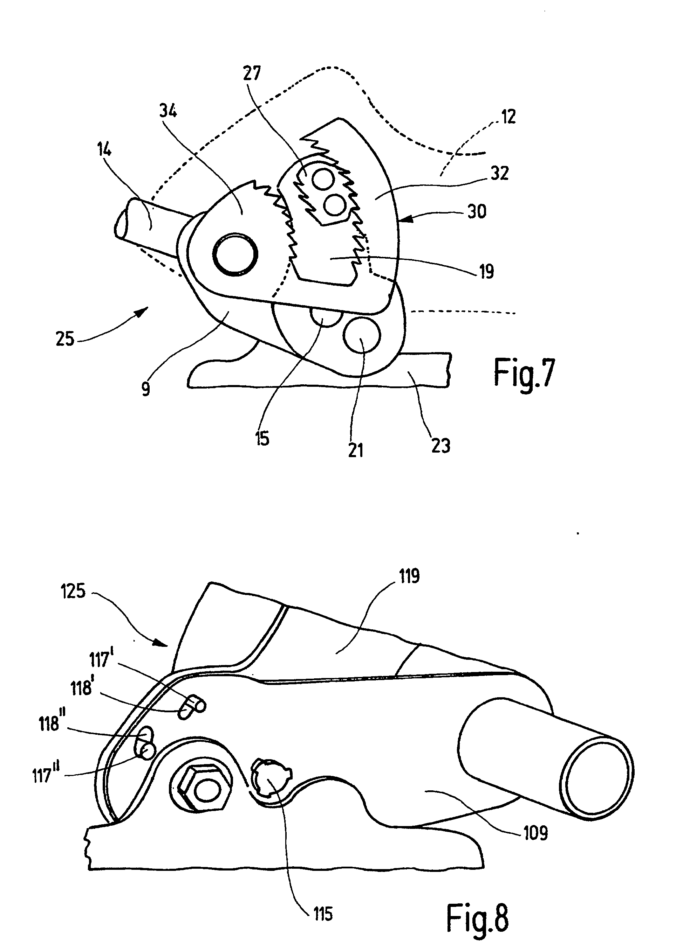

- Fig. 7: eine Darstellung entsprechend Fig. 6 im Front-Crashfall, und
- Fig. 8: eine perspektivische Teilansicht des zweiten Ausführungsbeispiels im Innenbereich der rechten hinteren Schwinge im Normalfall.

Ein als Fahrersitz eines Kraftfahrzeuges ausgebildeter Fahrzeugsitz 1 weist als fahrzeugstruktorfesten Unterbau 3 auf seinen beiden Seiten je ein Sitzschienenpaar zur Längseinstellung auf. Für eine - motorisch angetriebene - Höheneinstellung sind vordere Schwingen 7 mit einem unteren Ende am Unterbau 3 und hintere Schwingen 9 auf eine später beschriebene Weise angelenkt. Mit dem oberen Ende sind die Schwingen 7 und 9 an einem Sitzrahmen 10 angelenkt, welcher das Sitzkissen und die Rückenlehne des Fahrzeugsitzes 1 trägt. Der Sitzrahmen 10 besteht im wesentlichen aus zwei Sitzrahmen-Seitenteilen 12, einer vorderen Sitzrahmen-Quertraverse und einer hinteren Sitzrahmen-Quertraverse 14, welche untereinander fest verbunden sind. An der rohrförmigen, hinteren Sitzrahmen-Quertraverse 14 sind die hinteren Schwingen 9 angelenkt. Der Übersichtlichkeit halber ist im folgenden die rechte, tunnelseitige Fahrzeugsitzseite beschrieben. Die linke, schwellerseitige Fahrzeugsitzseite ist vorzugsweise entsprechend aufgebaut.

Im Bereich des unteren Endes der hinteren Schwinge 9 ist mittels einer Drehverbindung 15 und eines in Fahrtrichtung vor der Drehverbindung 15 angeordneten Scherstiftes 17 eine Klinke 19 zunächst drehfest an der hinteren Schwinge 9 angebracht. Der Scherstift 17 ist beispielsweise als Blindniet ausgebildet. Die Klinke 19 ist mittels eines Lagerbolzens 21 an einem Adapter 23 des Unterbaus 3 angelenkt. Die hintere Schwinge 9 umschließt den Lagerbolzen 21 mit Abstand. Der als Ganzes mit 25 bezeichnete Höheneinsteller umfaßt somit den Unterbau 3, die vorderen und hinteren Schwingen 7 und 9, den Sitzrahmen 10 und die Klinken 19. Im beschriebenen Normalgebrauch ist der Höheneinsteller 25 auf jeder Fahrzeugsitzseite als Viergelenk ausgebildet.

An ihrem freien, oberen Ende weist die Klinke 19 auf der bezüglich des Fahrzeugsitzes 1 nach außen gewandten Seite ein flaches Zahnelement 27 auf. Das Zahnelement 27 ist mit einer näherungsweise nach vorne und oben weisenden, bezüglich der hinteren Sitzrabxnen-Quertraverse 14 radial äußeren Verzahnung und einer näherungsweise nach hinten und unten weisenden, bezüglich der hinteren Sitzrahmen-Quertraverse radial inneren Verzahnung versehen. Auf der nach außen gewandten Seite des Zahnelements 27 ist ein über das Zahnelement 27 überstehendes Klinkenblech 29 angeordnet. Die Klinke 19, das Zahnelement 27 und das Klinkenblech 29 sind im Ausführungsbeispiel miteinander durch zwei Niete fest verbunden, können aber auch anders verbunden oder wenigstens teilweise einstückig ausgebildet sein.

Am Sitzrahmen-Seitenteil 12 ist in unmittelbarer Nachbarschaft des Zahnelementes 27 ein Zahnsegment 30 fest angebracht. Das Zahnsegment 30 ist mit einem um die Sitzrahmen-Quertraverse 14 gekrümmten und bezüglich der Sitzrahmen-Quertraverse 14 radial äußeren Zahnbogen 32 mit radial nach innen weisender Verzahnung und mit einem ebenfalls um die Sitzrahmen-Quertraverse 14 gekrümmten und bezüglich der Sitzrahmen-Quertraverse 14 radial inneren Zahnbogen 34 mit radial nach außen weisender Verzahnung versehen. In dem Zwischenraum zwischen den beiden, an ihrem unteren Ende einstückig miteinander verbundenen Zahnbögen 32 und 34 bewegt sich während einer normalen Betätigung des Höheneinstellers 25 das Zahnelement 27 auf einer um die hintere Sitzrahmen-Quertraverse 14 gekrümmten Bahn. Die Länge der Zahnbögen 32 und 34 ist daher auf den möglichen Schwenkwinkel des Höheneinstellers 25 abgestimmt Die Klinke 19 und das Klinkenblech 29 übergreifen die beiden Zahnbögen 32 und 34 wenigstens teilweise, so daß in axialer Richtung eine Sicherung entsteht

Bei einem Frontcrash wird der Sitzrahmen 10 mit den darauf angebrachten, weiteren Bauteilen des Fahrzeugsitzes 1 und dem Insassen relativ zum Unterbau 3 nach vorne beschleunigt. Zunächst werden die auftretenden Kräfte vom Sitzrahmen 10 über die Schwingen 7 und 9 samt verbundenen Klinke 19 in den Unterbau 3 und weiter in die Fahrzeugstruktur geleitet Bezüglich der Drehverbindung 15 wirkt dabei auf die hintere Schwinge 9 ein Drehmoment, welches versucht, die Klinke 19 relativ zur hinteren Schwinge 9 nach unten zu drehen. Bei einer definierten Grenzlast wird der Scherstift 17 zerstört. Der Höheneinsteller 25 hat nunmehr einen weiteren Freiheitsgrad, d.h. er bildet ein Fünfgelenk. Die Klinke 9 dreht sich nun um die Drehverbindung 15 relativ zur hinteren Schwinge 9 und gibt dadurch Weg für eine Bewegung des Sitzrahmens 10 frei, d.h. die Geometrie des Höheneinstellers 25 ändert sich. Das am Sitzrahmen 10 angebrachte Zahnsegment 30 gelangt nun mittels des radial äußeren Zahnbogens 32 als ein Crashgesperre in Zahneingriff mit dem Zahnelement 27 der Klinke 19. Durch diese Reduzierung der Freiheitsgrade liegt nun ein Dreigelenk vor, d.h. die drehfeste Verbindung des Sitzrahmens 10 und der hinteren Schwinge 9 unterbindet jede weitere Bewegung des Höheneinstellers 25. Ein Teil der auf den Sitzrahmen 10 wirkenden Kräfte wird nun vom Sitzrahmen 10 unter Überbrückung der hinteren Schwinge 9 über die Klinke 19 direkt in den Unterbau 3 und damit in die Fahrzeugstruktur geleitet Diese alternative Kraftübertragung entlastet den zwischen hinterer Schwinge 9 und Sitzrahmen 10 wirkenden Antrieb des Höheneinstellers 25 und sperrt den Höheneinsteller 25 auf der antriebsfreien Fahrzeugsitzseite, womit auch Kraftübertragungen zwischen den Fahrzeugsitzseiten und damit einseitige Überbelastungen verhindert werden.

Bei einem Heckcrash wird entsprechend der Sitzrahmen 10 samt Insassen relativ zum Unterbau 3 des Fahrzeugsitzes 1 nach hinten beschleunigt. Es wirkt nun über den Unterbau 3 auf die Klinke 19 ein Drehmoment, welches diese relativ zur hinteren Schwinge 9 zu drehen versucht Bei Überschreiten der definierten Grenzlast bricht der Scherstift 17, so daß eine Relativdrehung zwischen Klinke 19 und hinterer Schwinge 9 stattfindet. Der Höheneinsteller 25 wird durch den zusätzlichen Freiheitsgrad vorübergehend wiederum ein Fünfgelenk. Die Klinke 19 steuert nun in den radial inneren Zahnbogen 34 ein, welcher mit ihrem Zahnelement 27 in Zahneingriff gelangt. Der Höheneinsteller 25 wird auch durch diese Aktivierung des Crashgesperres wieder zum Dreigelenk, wird also starr. Die alternative Kraftübertragung vom Sitzrahmen 10 über das verriegelte Crashgesperre, die Klinke 19 und den Unterbau 3 in die Fabrzeugstruktur entlastet wie im Falle des Frontcrashs wiederum den Antrieb des Höheneinstellers und sperrt die antriebsfreie Seite.

Das zweite Ausführungsbeispiel stimmt weitgehend mit dem ersten Ausführungsbeispiel überein, weshalb gleiche oder gleichwirkende Bauteile um 100 höhere Bezugszeichen tragen. Im Höheneinsteller 125 ist zur drehfesten Verbindung zwischen der hinteren Schwinge 109 und der Klinke 119, welche relativ zueinander um eine Drehverbindung 115 drehbar sind, ein dünnerer Heckcrash-Scherstift 117' und ein dickerer Frontcrash-Scherstift 117" vorgesehen. Dabei sind im Normalfall der Heckcrash-Scherstift 117' am oberen Ende einer Heckcrash-Kulisse 118' der hinteren Schwinge 109 und der Frontcrash-Scherstift 117" am unteren Ende einer Frontcrash-Kulisse 118" der hinteren Schwinge 109 angeordnet Die Funktionsweise des Ausführungsbeispiels, insbesondere der Scherstifte, ist im Crashfall die gleiche wie beim ersten Ausführungsbeispiel, jedoch ist die Grenzlast des Frontcrash-Scherstiftes 117" höher als diejenige des Heckcrash-Scherstiftes 117', d.h. er bricht erst bei höheren Crasbkräften.

### Bezugszeichenliste

- 1: Fahrzeugsitz
- 3: Unterbau
- 7: vordere Schwinge
- 9, 109: hintere Schwinge
- 10: Sitzrahmen
- 12: Sitzrahmen-Seitenteil
- 14: Sitzrahmen-Quertraverse
- 15, 115: Drehverbindung
- 17: Scherstift
- 19, 119: Klinke
- 21: Lagerbolzen
- 23: Adapter
- 25, 125: Höheneinsteller
- 27: Zahnelement, Verriegelungselement
- 29: Klinkenblech
- 30: Zahnsegment
- 32: radial äußerer Zahnbogen, Verriegelungsgegenelement
- 34: radial innerer Zahnbogen, Verriegelungsgegenelement
- 117': Heckerash-Scherstift
- 117": Frontcrash-Scherstift
- 118': Heckerash-Kulisse
- 118": Frontcrash-Kulisse

## Patentansprüche

1. Fahrzeugsitz, insbesondere Kraftfahrzeugsitz, mit einem einen Antrieb aufweisenden Höheneinsteller (25; 125) zur Einstellung der Höhe eines Sitzrahmens (10) des Fahrzeugsitzes (1) relativ zu einem mit der Fahrzeugstruktur verbundenen Unterbau (3), wobei wenigstens ein Crashgesperre (27, 30) im Bereich einer hinteren Schwinge (9; 109) und einer zunächst drehfest an der hinteren Schwinge (9; 109) angebrachten Klinke (19; 119) vorgesehen ist, und wobei im Crashfall eine irreversible Geometrieänderung des Höheneinstellers (25; 125) das Crashgesperre (27, 30) aktiviert, welches eine alternative Kraftübertragung zwischen dem Sitzrahmen (10) und dem Unterbau (3) zur Verfügung stellt, **dadurch gekennzeichnet, dass** das Crashgesperre (27, 30) den Höheneinsteller (25; 125) auf der antriebsfreien Fahrzeugsitzseite sperrt, indem es unter Überbrückung der hinteren Schwinge (9; 109) den Sitzrahmen (10) mit der Klinke (19; 119) verriegelt.

2. Fahrzeugsitz nach Anspruch 1, **dadurch gekennzeichnet, dass** die Geometrieänderung des Höheneinstellers (25; 125) durch eine Freigabe wenigstens eines zusätzlichen Bewegungs-Freiheitsgrades des Höheneinstellers (25; 125) erfolgt.

3. Fahrzeugsitz nach Anspruch 2, **dadurch gekennzeichnet, dass** das Crashgesperre (27, 30) durch eine Bewegung des Höheneinstellers (25; 125) aufgrund des zusätzlichen Bewegungs-Freiheitsgrades verriegelt, wobei das Verriegeln des Crashgesperres (27, 30) die Bewegungs-Freiheitsgrade des Höheneinstellers (25; 125) um wenigstens zwei verringert.

4. Fahrzeugsitz nach Anspruch 2 oder 3, **dadurch gekennzeichnet, dass** die Freigabe des zusätzlichen Bewegungs-Freiheitsgrades durch eine irreversible Zustandsänderung wenigstens eines Verbindungselementes (17; 117', 117") erfolgt, das die hintere Schwinge (9; 109) und die Klinke (19; 119) drehfest zusammenhält, welche zwei ansonsten relativ zueinander verdrehbare Bestandteile (9, 19; 109, 119) des Höheneinstellers (25; 125) bilden.

5. Fahrzeugsitz nach Anspruch 4, **dadurch gekennzeichnet, dass** als Verbindungselement (17; 117', 117") wenigstens ein Stift mit Sollbruchstelle vorgesehen ist.

6. Fahrzeugsitz nach einem der Ansprüche 1 bis 5, **dadurch gekennzeichnet, dass** das Crashgesperre (27, 30) in zwei unterschiedlichen Lastrichtungen wirksam ist.

7. Fahrzeugsitz nach Anspruch 5 und 6, **dadurch gekennzeichnet, dass** für jede Lastrichtung ein Stift (117', 117") mit Sollbruchstelle vorgesehen ist.

8. Fahrzeugsitz nach Anspruch 6 oder 7, **dadurch gekennzeichnet, dass** das Crashgesperre (27, 30) ein an der Klinke (19; 119) vorgesehenes und bei der Geometrieänderung des Höheneinstellers (25; 125) bewegliches Verriegelungselement (27) aufweist, welches in Abhängigkeit der Lastrichtung mit unterschiedlichen Verriegelungs-Gegenelementen (32, 34) zusammenwirkt, mit denen ein fest am Sitzrahmen (10) angebrachtes Zahnsegment (30) versehen ist.

9. Fahrzeugsitz nach einem der Ansprüche 1 bis 8, **dadurch gekennzeichnet, dass** das Crashgesperre (27, 30) bei Überschreiten einer definierten Grenzlast aktiviert wird.

10. Fahrzeugsitz nach einem der Ansprüche 1 bis 9, **dadurch gekennzeichnet, dass** die Klinke (19; 119) mittels eines Lagerbolzens (21) an einem Adapter (23) des Unterbaus (3) angelenkt ist, wobei die Schwinge (9; 109) den Lagerbolzen (21) mit Abstand umschließt.

## Claims

1. Vehicle seat, in particular a motor vehicle seat, having a height adjuster (25; 125), which has a drive, for adjusting the height of a seat frame (10) of the vehicle seat (1) relative to a substructure (3) which is connected to the vehicle structure, at least one crash locking mechanism (27, 30) being provided in the region of a rear lever (9; 109) and a detent (19; 119) which is at first fitted in a rotationally secure manner to the rear lever (9; 109), and, in the event of a crash, an irreversible change in the geometry of the height adjuster (25; 125) actuating the crash locking mechanism (27, 30) which provides an alternative force transmission means between the seat frame (10) and the substructure (3), **characterised in that** the crash locking mechanism (27, 30) locks the height adjuster (25; 125) at the side of the vehicle seat that is not provided with a drive **in that** it locks the seat frame (10) by means of the detent (19; 119) with the rear lever (9; 109) being bypassed.

2. Vehicle seat according to claim 1, **characterised in that** the change in geometry of the height adjuster (25; 125) is effected by at least one additional degree of freedom of movement of the height adjuster (25; 125) being released.

3. Vehicle seat according to claim 2, **characterised in that** the crash locking mechanism (27, 30') locks by means of a movement of the height adjuster (25; 125) owing to the additional degree of freedom of movement, the locking action of the crash locking mechanism (27, 30) reducing the degrees of freedom of movement of the height adjuster (25; 125) by at least two.

4. Vehicle seat according to claim 2 or 3, **characterised in that** the release of the additional degree of freedom of movement is brought about by an irreversible change in state of at least one connection element (17; 117', 117") which holds together, in a rotationally secure manner, the rear lever (9; 109) and the detent (19; 119) which form two components (9, 19; 109, 119) of the height adjuster (25; 125) which can otherwise be rotated relative to each other.

5. Vehicle seat according to claim 4, **characterised in that** at least one pin having a desired breaking point is provided as a connection element (17; 117', 117").

6. Vehicle seat according to any one of claims 1 to 5, **characterised in that** the crash locking mechanism (27, 30) is active in two different load directions.

7. Vehicle seat according to claim 5 and 6, **characterised in that** a pin (117', 117") having a desired breaking point is provided for each load direction.

8. Vehicle seat according to claim 6 or 7, **characterised in that** the crash locking mechanism (27, 30) has a locking element (27) which is provided on the detent (19; 119) and which is movable when the geometry of the height adjuster (25; 125) changes and which co-operates, in accordance with the load direction, with various locking counter-elements (32, 34), with which a tooth segment (30) which is securely fitted to the seat frame (10) is provided.

9. Vehicle seat according to any one of claims 1 to 8, **characterised in that** the crash locking mechanism (27, 30) is actuated when a defined limit load is exceeded.

10. Vehicle seat according to any one of claims 1 to 9, **characterised in that** the detent (19; 119) is articulated to an adapter (23) of the substructure (3) by means of a bearing pin (21), the lever (9; 109) surrounding the bearing pin (21) with spacing.

## Revendications

1. Siège de véhicule, en particulier siège de véhicule automobile, ayant un dispositif de réglage en hauteur (25 ; 125) présentant une commande, en vue du réglage de la hauteur d'un cadre de siège (10) du siège de véhicule (1) par rapport à une infrastructure (3) liée à la structure du véhicule, à l'occasion de quoi au moins un dispositif d'encliquetage de collision (27, 30) est prévu dans la zone d'un bras oscillant arrière (9 ; 109) et d'un cliquet (19 ; 119) appliqué tout d'abord solidaire en rotation sur le bras oscillant arrière (9 ; 109), et à l'occasion de quoi, en cas d'accident, une modification géométrique irréversible du dispositif de réglage en hauteur (25 ; 125) active le dispositif d'encliquetage de collision (27, 30), lequel met à disposition une transmission de force alternative entre le cadre de siège (10) et l'infrastructure (3), **caractérisé par le fait que** le dispositif d'encliquetage de collision (27, 30) bloque le dispositif de réglage en hauteur (25 ; 125) sur le côté du siège de véhicule sans commande, en ce qu'il verrouille, sous pontage du bras oscillant arrière (9 ; 109), le cadre de siège (10) avec le cliquet (19 ; 119).

2. Siège de véhicule selon la revendication 1, **caractérisé par le fait que** la modification de géométrie du dispositif de réglage en hauteur (25 ; 125) a lieu par une autorisation d'au moins un degré de liberté de mouvement additionnel du dispositif de réglage en hauteur (25 ; 125).

3. Siège de véhicule selon la revendication 2, **caractérisé par le fait que** le dispositif d'encliquetage de collision (27, 30) verrouille par un mouvement du dispositif de réglage en hauteur (25 ; 125) sur la base du degré de liberté de mouvement supplémentaire, à l'occasion de quoi le verrouillage du dispositif d'encliquetage de collision (27, 30) diminue les degrés de liberté de mouvement du dispositif de réglage en hauteur (25 ; 125) d'au moins deux.

4. Siège de véhicule selon l'une des revendications 2 ou 3, **caractérisé par le fait que** l'autorisation du degré de liberté de mouvement additionnel a lieu par une modification d'état irréversible d'au moins un élément de liaison (17 ; 117', 117"), qui maintient solidaire en rotation le bras oscillant arrière (9 ; 109) et le cliquet (19 ; 119), lesquels forment deux composants à part cela aptes à être entraînés en rotation l'un par rapport à l'autre (9, 19 ; 109, 119) du dispositif de réglage en hauteur (25 ; 125).

5. Siège de véhicule selon la revendication 4, **caractérisé par le fait que**, comme élément de liaison (17 ; 117', 117"), est prévue au moins une goupille avec un point destiné à la rupture.

6. Siège de véhicule selon l'une des revendications 1 à 5, **caractérisé par le fait que** le dispositif d'encliquetage de collision (27, 30) est actif dans deux directions de charge différentes.

7. Siège de véhicule selon les revendications 5 et 6, **caractérisé par le fait que**, pour chaque direction de charge, une goupille (117', 117") avec un point destiné à la rupture est prévue.

8. Siège de véhicule selon l'une des revendications 6 ou 7, **caractérisé par le fait que** le dispositif d'encliquetage de collision (27, 30) présente un élément de verrouillage (27) prévu sur le cliquet (19 ; 119) et mobile lors de la modification de géométrie du dispositif de réglage en hauteur (25 ; 125), lequel élément de verrouillage coopère en fonction de la direction de charge avec différents contre-éléments de verrouillage, desquels un segment denté (30) rapporté solidement sur le cadre de siège (10) est pourvu.

9. Siège de véhicule selon l'une des revendications 1 à 8, **caractérisé par le fait que** le dispositif d'encliquetage de collision (27, 30) est activé en cas de dépassement d'une charge limite définie.

10. Siège de véhicule selon l'une des revendications 1 à 9, **caractérisé par le fait que** le cliquet (19 ; 119) est articulé au moyen d'un tourillon de palier (21) sur un adaptateur (23) de l'infrastructure (3), à l'occasion de quoi le bras oscillant (9 ; 119) entoure le tourillon de palier (21) avec un intervalle.
